(19) Europäisches Patentamt / European Patent Office / Office européen des brevets

(11) EP 4 428 195 A1

# (12) EUROPEAN PATENT APPLICATION
published in accordance with Art. 153(4) EPC

(43) Date of publication:
**11.09.2024 Bulletin 2024/37**

(21) Application number: **22889879.7**

(22) Date of filing: **27.10.2022**

(51) International Patent Classification (IPC):
***C08L 79/08*** *(2006.01)* ***C01B 32/174*** *(2017.01)*
***C08G 73/10*** *(2006.01)* ***C08K 3/04*** *(2006.01)*
***C08K 3/08*** *(2006.01)* ***C08K 5/3415*** *(2006.01)*
***H01M 4/134*** *(2010.01)* ***H01M 4/1395*** *(2010.01)*
***H01M 4/62*** *(2006.01)*

(52) Cooperative Patent Classification (CPC):
**C01B 32/174; C08G 73/10; C08K 3/04; C08K 3/08; C08K 5/3415; C08L 79/08; H01M 4/134; H01M 4/1395; H01M 4/62;** Y02E 60/10

(86) International application number:
**PCT/JP2022/040229**

(87) International publication number:
**WO 2023/080059 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2021 JP 2021180606**

(71) Applicant: **DKS Co. Ltd.**
**Kyoto-shi, Kyoto 600-8873 (JP)**

(72) Inventors:
- **NAKAYAMA, Masashi**
  **Kyoto-shi, Kyoto 600-8873 (JP)**
- **HIBINO, Atsuhiko**
  **Kyoto-shi, Kyoto 600-8873 (JP)**
- **YAMAMOTO, Mika**
  **Kyoto-shi, Kyoto 600-8873 (JP)**
- **HIGASHIZAKI, Tetsuya**
  **Kyoto-shi, Kyoto 600-8873 (JP)**

(74) Representative: **Hoffmann Eitle**
**Patent- und Rechtsanwälte PartmbB**
**Arabellastraße 30**
**81925 München (DE)**

## (54) DISPERSION OF CARBON NANOTUBES, COATING LIQUID COMPOSITION FOR ELECTRODE USING SAME, ELECTRODE, AND LITHIUM ION SECONDARY BATTERY

(57) Provided is a dispersion of carbon nanotubes having excellent dispersibility in an organic solvent. A dispersion according to an embodiment includes carbon nanotubes dispersed in an organic solvent with a polyimide containing an aromatic diamine compound represented by the following general formula (1) as a polymerization component. In formula (1), $R^1$ to $R^8$ are each selected from the group consisting of a hydrogen atom, a fluorine atom, a saturated aliphatic group, a saturated alicyclic group, and an aromatic group, and at least one of $R^1$ to $R^8$ is an aromatic group.

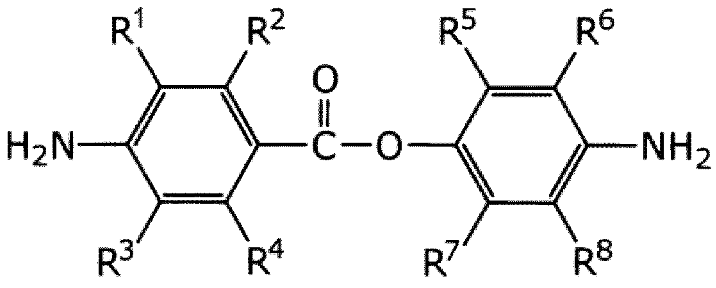

(1)

EP 4 428 195 A1

**Description**

Technical Field

Embodiments of the present invention relate to a dispersion in which carbon nanotubes are dispersed in an organic solvent, a coating liquid composition for an electrode containing the dispersion, an electrode using the coating liquid composition for an electrode, and a lithium ion secondary battery including the electrode.

Background Art

Carbon nanotubes are cylindrical carbon with nanometer-sized diameters, and have electrical conductivity, thermal conductivity, mechanical strength, and like properties. While having such excellent properties, carbon nanotubes strongly aggregate due to van der Waals forces and thus are difficult to uniformly disperse in an organic solvent.

In order to improve the dispersibility of carbon nanotubes, PTL 1 proposes that a polyamic acid, in which at least part of its diamine component is a unit containing a benzimidazole structure, is used as a dispersant for dispersing carbon nanotubes in a polar organic solvent, and it is also described that the polyamic acid is imidized and converted into a polyimide having heat resistance.

Citation List

Patent Literature

PTL 1: JP2013-036021A

Summary of Invention

Technical Problem

An object of an embodiment of the invention is to provide a dispersion of carbon nanotubes having excellent dispersibility in an organic solvent.

Solution to Problem

The invention includes the following embodiments.

[1] A dispersion, in which carbon nanotubes are dispersed in an organic solvent with a polyimide containing an aromatic diamine compound represented by the following general formula (1) as a polymerization component.

[Chemical formula 1]

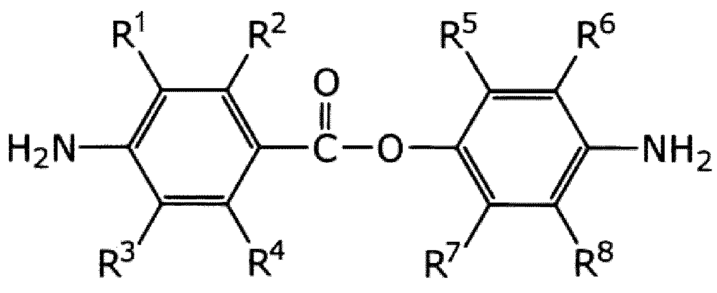

(1)

(In general formula (1), $R^1$ to $R^8$ are each independently selected from the group consisting of a hydrogen atom, a fluorine atom, a substituted or unsubstituted saturated aliphatic group, a substituted or unsubstituted saturated alicyclic group, and a substituted or unsubstituted aromatic group, and at least one of $R^1$ to $R^8$ is a substituted or unsubstituted aromatic group.)

[2] The dispersion according to [1], in which the aromatic diamine compound includes a compound represented by the following formula (2).

[Chemical formula 2]

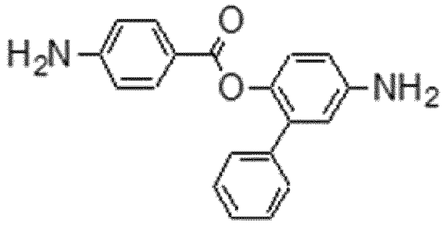

(2)

[3] The dispersion according to [1] or [2], in which the carbon nanotubes are single-walled carbon nanotubes.
[4] The dispersion according to any one of [1] to [3], in which the organic solvent includes N-methyl-2-pyrrolidone.
[5] A coating liquid composition for an electrode, including the dispersion according to any one of [1] to [4].
[6] The coating liquid composition for an electrode according to [5], further including a silicon-based negative electrode active material.
[7] An electrode including a layer made of solids of the coating liquid composition for an electrode according to [5] or [6].
[8] A lithium ion secondary battery including the electrode according to [7].

Advantageous Effects of Invention

According to some embodiments of the invention, the dispersibility of carbon nanotubes in an organic solvent can be improved.

Description of Embodiments

The dispersion according to this embodiment is a dispersion of carbon nanotubes dispersed in an organic solvent with a polyimide, and contains (A) carbon nanotubes, (B) a polyimide, and (C) an organic solvent.

[(A) Carbon Nanotubes]

A carbon nanotube is a monolayer or multilayer coaxial tubular substance composed of a six-membered ring network of carbon (graphene sheet). As carbon nanotubes, monolayer single-walled carbon nanotubes (SWCNT) and multilayer multi-walled carbon nanotubes (MWCNT) can be mentioned, and, among multi-walled carbon nanotubes, those with a two-layer structure are particularly called double-walled carbon nanotubes (DWCNT). Any one of them can be used alone, and it is also possible to use a combination of two or more kinds. It is preferable to use single-walled carbon nanotubes as the carbon nanotubes.

The method for producing carbon nanotubes is not particularly limited, and they can be obtained by any of known various production methods including a thermal decomposition method using a catalyst, an arc discharge method, a laser vaporization method, CVD methods such as HiPco and CoMoCAT methods, and the like.

The average diameter of the carbon nanotubes is not particularly limited and may be 0.5 to 100 nm, or 1 to 50 nm. The average length of the carbon nanotubes is not particularly limited and may be, for example, 50 nm to 10 mm, or 500 nm to 100 μm. The aspect ratio (i.e., the ratio of the average length to the average diameter) of the carbon nanotubes is not particularly limited and may be, for example, 10 or more, or 100 or more.

The average diameter and average length of carbon nanotubes can be determined by measuring the dimensions of randomly selected 50 carbon nanotubes in an atomic force microscope image and taking their arithmetic average. Lengths in the millimeter range unmeasurable with an atomic force microscope may be measured using a microscope image.

[(B) Polyimide]

Polyimide is a general term for polymers containing an imide bond in the repeating unit. In this embodiment, a polyimide containing an aromatic diamine compound represented by the following general formula (1) as a polymerization component is used. Here, a polymerization component means a polyimide-forming monomer.

[Chemical formula 3]

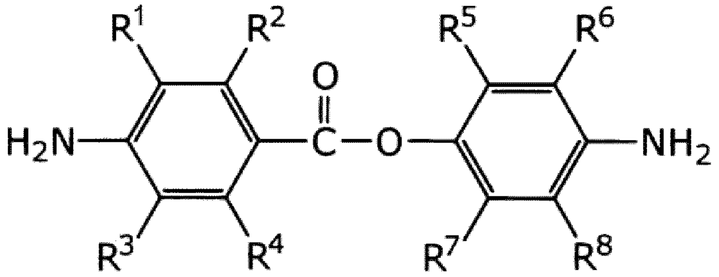

(1)

In general formula (1), $R^1$ to $R^8$ are each independently selected from the group consisting of a hydrogen atom, a fluorine atom, a substituted or unsubstituted saturated aliphatic group, a substituted or unsubstituted saturated alicyclic group, and a substituted or unsubstituted aromatic group, and at least one of $R^1$ to $R^8$ is a substituted or unsubstituted aromatic group. It is preferable that one or two of $R^1$ to $R^8$ are substituted or unsubstituted aromatic groups.

In general formula (1), the saturated aliphatic group is a monovalent saturated aliphatic group, and may be linear or branched. The saturated aliphatic group is preferably an alkyl group, but may also be an alkoxy group, an alkylamino group, or the like linked to the main backbone via an oxygen atom or a nitrogen atom. The saturated aliphatic group is preferably unsubstituted, but may also have a substituent. As substituents, for example, halogen groups such as a fluoro group and a chloro group, an amino group, a nitro group, a hydroxyl group, a cyano group, a carboxyl group, a sulfonic acid group, and the like can be mentioned, and one or more of these substituents may be present.

The number of carbon atoms in the saturated aliphatic group, preferably an alkyl group, is preferably 1 to 10, and more preferably 1 to 3. The number of carbon atoms here refers to, in the case where the substituent contains a carbon atom, the number of carbon atoms including the substituent. As specific examples of saturated aliphatic groups having 1 to 10 carbon atoms, a methyl group, an ethyl group, an n-propyl group, an isopropyl group, an n-butyl group, a tert-butyl group, an n-pentyl group, a sec-pentyl group, an n-hexyl group, an n-heptyl group, an n-octyl group, an n-nonyl group, an n-decyl group, a fluoromethyl group, a difluoromethyl group, a trifluoromethyl group, a chloromethyl group, a dichloromethyl group, a trichloromethyl group, a bromomethyl group, a dibromomethyl group, a tribromomethyl group, a fluoroethyl group, a difluoroethyl group, a trifluoroethyl group, a chloroethyl group, a dichloroethyl group, a trichloroethyl group, a bromoethyl group, a dibromoethyl group, a tribromoethyl group, a hydroxymethyl group, a hydroxyethyl group, a hydroxylpropyl group, a methoxy group, an ethoxy group, an n-propoxy group, an n-butoxy group, an n-pentyloxy group, a sec-pentyloxy group, an n-hexyloxy group, an n-heptyloxy group, an n-octyloxy group, an n-nonyloxy group, an n-decyloxy group, a trifluoromethoxy group, a methylamino group, a dimethylamino group, a trimethylamino group, an ethylamino group, a propylamino group, and the like can be mentioned. Among them, from the viewpoint of steric hindrance and the like, it is preferable to use a methyl group, an ethyl group, a methoxy group, an ethoxy group, or a trifluoromethyl group.

In general formula (1), the saturated alicyclic group is a monovalent saturated alicyclic group, and may have an aliphatic group as long as it has a non-aromatic carbon ring. The saturated alicyclic group is preferably a cycloalkyl group, but may also be a cycloalkyloxy group, a cycloalkylamino group, or the like linked to the main backbone via an oxygen atom or a nitrogen atom. The saturated alicyclic group is preferably unsubstituted, but may also have a substituent. As substituents, for example, an alkyl group, halogen groups such as a fluoro group and a chloro group, an amino group, a nitro group, a hydroxyl group, a cyano group, a carboxyl group, a sulfonic acid group, and the like can be mentioned, and one or more of these substituents may be present.

The number of carbon atoms in the saturated alicyclic group, preferably a cycloalkyl group, is preferably 3 to 10. The number of carbon atoms here refers to, in the case where the substituent contains a carbon atom, the number of carbon atoms including the substituent. As specific examples of saturated alicyclic groups having 3 to 10 carbon atoms, a cyclopropyl group, a cyclobutyl group, a cyclopentyl group, a cyclohexyl group, a cycloheptyl group, a cyclohexyloxy group, and the like can be mentioned.

In general formula (1), the aromatic group is a monovalent aromatic group. It is preferable that the aromatic ring is directly linked to the main backbone, but it may also be linked to the main backbone via an alkylene group, an oxygen atom, or a nitrogen atom. Aromatic groups also include heteroaromatic groups such as a pyrrole group. The aromatic group is preferably unsubstituted, but may also have a substituent. As substituents, for example, an alkyl group, an alkoxy group, halogen groups such as a fluoro group and a chloro group, an amino group, a nitro group, a hydroxyl group, a cyano group, a carboxyl group, a sulfonic acid group, and the like can be mentioned, and one or more of these substituents may be present.

The number of carbon atoms in the aromatic group is preferably 5 to 20, and more preferably 6 to 10. The

number of carbon atoms here refers to, in the case where the substituent contains a carbon atom, the number of carbon atoms including the substituent. The aromatic ring contained in the aromatic group is preferably a five- or higher-membered ring. As specific examples of aromatic groups having 5 to 20 carbon atoms, a phenyl group, a tolyl group, a dimethylphenyl group, an ethylphenyl group, a diethylphenyl group, a propylphenyl group, a butylphenyl group, a fluorophenyl group, a pentafluorophenyl group, a chlorophenyl group, a bromophenyl group, a methoxyphenyl group, a dimethoxyphenyl group, an ethoxyphenyl group, a diethoxyphenyl group, a benzyl group, a methoxybenzyl group, a dimethoxybenzyl group, an ethoxybenzyl group, a diethoxybenzyl group, an aminophenyl group, an aminobenzyl group, a nitrophenyl group, a nitrobenzyl group, a cyanophenyl group, a cyanobenzyl group, a phenethyl group, a phenylpropyl group, a phenoxy group, a benzyloxy group, a phenylamino group, a diphenylamino group, a biphenyl group, a naphthyl group, a phenylnaphthyl group, an anthryl group, an anthrylphenyl group, a phenylanthryl group, a phenanthryl group, a phenanthrylphenyl group, a phenylphenanthryl group, a pyrenyl group, a phenylpyrenyl group, a fluorenyl group, a phenylfluorenyl group, a naphthylethyl group, a naphthylpropyl group, an anthracenylethyl group, a phenanthryl ethyl group, and the like can be mentioned. Such specific examples also include heteroaromatic groups such as a pyrrole group, an imidazole group, a thiazole group, an oxazole group, a furan group, a thiophene group, a triazole group, a pyrazole group, an isoxazole group, an isothiazole group, a pyridine group, a pyrimidine group, a benzofuran group, a benzothiophene group, a quinoline group, an isoquinoline group, an indolyl group, a benzothiazolyl group, and a carbazolyl group. Among these aromatic groups, in terms of the availability of starting materials and synthesis cost, a phenyl group, a phenoxy group, a benzyl group, and a benzyloxy group are preferable.

In the above general formula (1), it is preferable that one or two of $R^5$ to $R^8$ are substituted or unsubstituted aromatic groups, and it is more preferable that at least $R^5$ or $R^7$ is a substituted or unsubstituted aromatic group. As a result of having an aromatic group at such a position, the steric hindrance of the aromatic diamine compound can be suppressed, and the polymerization reaction with an acid anhydride or the like can proceed well.

In a preferred embodiment, one or two of $R^5$ to $R^8$ in general formula (1) are substituted or unsubstituted aromatic groups, and $R^1$ to $R^8$ other than aromatic groups are each selected from the group consisting of a hydrogen atom, a fluorine atom, a substituted or unsubstituted saturated aliphatic group, and a substituted or unsubstituted saturated alicyclic group. Specifically, as the aromatic diamine compound represented by general formula (1), a compound represented by the following formula (2) can be mentioned as a preferred example (a mode where $R^7$ is an aromatic group, and $R^1$ to $R^6$ and $R^8$ other than $R^7$ are hydrogen atoms, in formula (1)).

[Chemical formula 4]

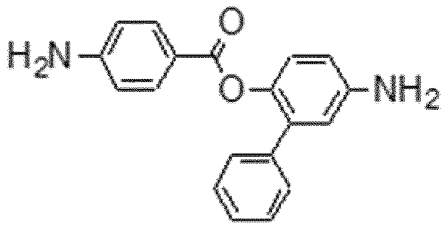

(2)

In this embodiment, the polyimide (B) is a reaction product of a diamine (BX) including an aromatic diamine compound of general formula (1) (hereinafter simply referred to as "aromatic diamine (BX1)") and an acid anhydride (BY), and contains the diamine (BX) and the acid anhydride (BY) as polymerization components.

The diamine (BX) may be an aromatic diamine (BX1) alone, and it is also possible to use other diamines together. Other diamines are not particularly limited, and aromatic diamines (excluding aromatic diamines (BX1)), alicyclic diamines, and aliphatic diamines can be mentioned. Among them, aromatic diamines are preferable.

As aromatic diamines other than aromatic diamines (BX1), for example, carboxy group-free aromatic diamines (BX2) and carboxy group-containing aromatic diamines (BX3) can be mentioned. Together with an aromatic diamine (BX1), one or both of a carboxy group-free aromatic diamine (BX2) and a carboxy group-containing aromatic diamine (BX3) may be used.

As specific examples of carboxy group-free aromatic diamines (BX2), diaminodiphenylsulfones such as bis[4-(4-aminophenoxy)phenyl]sulfone (BAPS), 3,3'-diaminodiphenylsulfone, 4,4'-diaminodiphenylsulfone, and 3,7-diaminodimethyldibenzothiophene 5,5-dioxide, diaminodiphenylpropanes such as 2,2-bis[4-(4-aminophenoxy)phenyl]propane (BAPP), 2,2-bis(4-aminophenyl)propane, and 2,2-bis(3-methyl-4-aminophenyl)propane, diaminodiphenoxybenzenes such as 1,3-bis(3-aminophenoxy)benzene (APB-N), 1,3-bis(4-aminophenoxy)benzene (TPE-R), and 1,4-bis(4-aminophenoxy)benzene, diaminobenzenes such as m-phenylenediamine, p-phenylenediamine, 2,4-diaminotoluene, 2,4-diamino-3,5-diethyltoluene, and 2,6-diamino-3,5-diethyltoluene, diaminoindanes such as 5-amino-1,3,3-trimethyl-1-(4-aminophenyl)indane and 6-amino-1,3,3-trimethyl-1-(4-aminophenyl)indane, diaminobiphenyls such as 4,4'-diamino-2,2'-dimethyl-1,1'-biphenyl, 4,4'-diamino-3,3'-dimethyl-1,1'-biphenyl, and 2,2'-bis(trifluoromethyl)benzidine, diaminodiphenyl ethers such as 3,4'-diaminodiphenyl ether and 4,4'-diaminodiphenyl ether, diaminodiphenyl sulfides such as 4,4'-diaminodiphenyl sulfide, diaminodiphenyl esters such as 4-aminophenyl-4-aminobenzoate, diaminofluorenes such as 4,4'-(9-fluorenylidene)dianiline and 9,9'-bis(3-methyl-4-aminophenyl)fluorene, diaminodiphenylhexafluoropropanes such as 4,4'-(hexafluoroisopropylidene)dianiline, 2,2-bis(3-amino-4-methylphenyl)hexafluoropropane, and 2,2-bis[4-(4-aminophenoxy)phenyl]hexafluoropropane, diaminodiisopropylbenzenes such as $\alpha,\alpha$-bis[4-(4-aminophenoxy)phenyl]-1,3-diisopropylbenzene and $\alpha,\alpha$-bis[4-(4-aminophenoxy)phenyl]-1,4-diisopropylbenzene, and hydroxy group-containing diamines such as 3,3'-diamino-4,4'-dihydroxy-1,1' -biphenyl, 4,4' -diamino-3,3' -dihydroxy-1,1' -biphenyl, 2,2-bis(3-amino-4-hydroxyphenyl)propane, 2,2-bis(3-amino-4-hydroxyphenyl)hexafluoropropane, 1,3 -bi s(3 - hydroxy-4-aminophenoxy)benzene, 2,2-bis(3-hydroxy-4-aminophenyl)benzene, and 3,3'-diamino-4,4'-dihydroxydiphenylsulfone can be mentioned. Any one of them can be used alone, and it is also possible to use a combination of two or more kinds. Among them, as a carboxy group-free aromatic diamine (BX2), it is preferable to use a diaminodiphenylsulfone such as bis[4-(4-aminophenoxy)phenyl]sulfone (BAPS) and/or a diaminodiphenylpropane such as 2,2-bis[4-(4-aminophenoxy)phenyl]propane (BAPP).

As specific examples of carboxy group-containing aromatic diamines (BX3), 5,5'-methylenebis(2-aminobenzoic acid) (MBAA), 4,4'-methylenebis(2-aminobenzoic acid), 1,2-bis(4-amino-3-carboxyphenyl)ethane, 1,2-bis(3-amino-4-carboxyphenyl)ethane, 3,3'-dicarboxybiphenyl-4,4'-diamine, 4,4'-dicarboxybiphenyl-3,3'-diamine, bis(4-amino-3,5-dicarboxyphenyl)methane, 1,2-bis(4-amino-3,5-dicarboxyphenyl)ethane, 3,3',5,5'-tetracarboxybiphenyl-4,4'-diamine, 1,3-bis(4-amino-2-carboxyphenoxy)benzene, 3,5-bis(4-aminophenoxy)benzoic acid, 5-amino-2-(aminophenoxy)benzoic acid, 3,5-diaminobenzoic acid, and the like can be mentioned. Any one of them can be used alone, and it is also possible to use a combination of two or more kinds. Among them, as a carboxy group-containing aromatic diamine (BX3), it is preferable to use at least one member selected from the group consisting of 5,5'-methylenebis(2-aminobenzoic acid) (MBAA), 1,2-bis(4-amino-3-carboxyphenyl)ethane, and 3,3'-dicarboxybiphenyl-4,4'-diamine.

The amount of aromatic diamine (BX1) in the diamine (BX) is not particularly limited, and the aromatic diamine (BX1) based on 100 mol% of the diamine (BX) may be 10 to 100 mol%, but is preferably 20 to 80 mol%, and more preferably 30 to 70 mol%.

The diamine (BX) as a polymerization component may include an aromatic diamine (BX1) and a carboxy group-free aromatic diamine (BX2). In that case, it is preferable that based on 100 mol% of the diamine (BX), the aromatic diamine (BX1) is 20 to 80 mol%, and the carboxy group-free aromatic diamine (BX2) is 20 to 80 mol%, and it is more preferable that the aromatic diamine (BX1) is 30 to 70 mol%, and the carboxy group-free aromatic diamine (BX2) is 30 to 70 mol%.

The diamine (BX) as a polymerization component may include an aromatic diamine (BX1), a carboxy group-free aromatic diamine (BX2), and a carboxy group-containing aromatic diamine (BX3). In that case, it is preferable that based on 100 mol% of the diamine (BX), the aromatic diamine (BX1) is 10 to 60 mol%, the carboxy group-free aromatic diamine (BX2) is 10 to 60 mol%, and the carboxy group-containing aromatic diamine (BX3) is 10 to 60 mol%, and it is more preferable that the aromatic diamine (BX1) is 20 to 40 mol%, the carboxy group-free aromatic diamine (BX2) is 20 to 40 mol%, and the carboxy group-containing aromatic diamine (BX3) is 20 to 40 mol%.

In the case where an aromatic diamine (BX1) and a carboxy group-free aromatic diamine (BX2) are used together as the diamine (BX), their molar ratio BX1/BX2 is preferably 1/3 to 3/1, more preferably 1/2 to 2/1, and still more preferably 2/3 to 3/2.

The acid anhydride (BY) as a polymerization component is not particularly limited, and aromatic acid anhydrides, alicyclic acid anhydrides, and aliphatic acid anhydrides can be used. Any one of them may be used alone, and it is also possible to use two or more kinds together. It is preferable that the acid anhydride (BY) includes an aromatic acid anhydride.

As aromatic acid anhydrides, aromatic tetracarboxylic dianhydrides can be used. As specific examples thereof, 4,4'-oxydiphthalic anhydride (ODPA), 3,3',4,4'-biphenyltetracarboxylic dianhydride (BPDA), 2,3,3',4'-biphenyltetracarboxylic dianhydride, 2,2',3,3'-biphenyltetracarboxylic dianhydride, pyrolimetic dianhydride, 3,3',4,4'-benzophenonetetracarboxylic dianhydride (BTDA), 2,2',3,3'-benzophenonetetracarboxylic dianhydride, 2,2-bis[3-(3,4-dicarboxyphenoxy)phenyl]propane dianhydride, 2,2-bis[4-(3,4-dicarboxyphenoxy)phenyl]propane dianhydride, 1,2,5,5-benzenetetracarboxylic dianhydride, 3,3',4,4'-diphenylsulfonetetracarboxylic dianhydride, methylene-4,4'-diphthalic dianhydride, 1,3-bis[2-(3,4-dicarboxyphenyl)-2-propyl]benzene dianhydride, bis[3-(3,4-dicarboxyphenoxy)phenyl]methane dianhydride, difluoromethylene-4,4'-diphthalic dianhydride, 3,3',4,4'-diphenylsulfonetetracarboxylic dianhydride, bis(3,4-dicarboxyphenyl)ether dianhydride, 2,3,6,7-naphthalenetetracarboxylic dianhydride, 1,2,5,6-naphthalenetetracarboxylic dianhydride, 9,9-bis(3,4-dicarboxyphenyl)fluorene dianhydride, 4,4'-[4,4'-(propane-2,2-diyl)diphenoxy]diphthalic dianhydride, and the like can be mentioned. Any one of them can be used alone, and it is also possible to use a combination of two or more kinds.

As alicyclic acid anhydrides, alicyclic tetracarboxylic dianhydrides can be used. As specific examples thereof,

norbornane-2-spiro-α-cyclopentanone-α'-spiro-2''-norbornane-5,5'',6,6''-tetracarboxylic dianhydride (CpODA), bicyclo[2,2,2]oct-7-ene-2,3,5,6-tetracarboxylic dianhydride (BTA), 1,2,4,5-cyclohexanetetracarboxylic dianhydride, 1,1'-bicyclohexane-3,3',4,4'-tetracarboxylic dianhydride, methylene-4,4'-bis(cyclohexane-1,2-dicarboxylic) dianhydride, oxy-4,4'-bis(cyclohexane-1,2-dicarboxylic) dianhydride, and the like can be mentioned. Any one of them can be used alone, and it is also possible to use a combination of two or more kinds.

As aliphatic acid anhydrides, aliphatic tetracarboxylic dianhydrides can be used. As specific examples thereof, 1,2,3,4-butanetetracarboxylic dianhydride and the like can be mentioned.

As the acid anhydride (BY), among the above examples, it is preferable to use at least one member selected from the group consisting of 4,4'-oxydiphthalic dianhydride (ODPA), 3,3',4,4'-biphenyltetracarboxylic dianhydride (BPDA), and 3,3',4,4'-benzophenonetetracarboxylic dianhydride (BTDA).

In one embodiment, the polyimide (B) may contain an aromatic diamine (BX1), a carboxy group-free aromatic diamine (BX2), and an aromatic acid anhydride as polymerization components. In another embodiment, the polyimide (B) may contain an aromatic diamine (BX1), a carboxy group-free aromatic diamine (BX2), a carboxy group-containing aromatic diamine (BX3), and an aromatic acid anhydride as polymerization components.

The number average molecular weight (Mn) of the polyimide (B), which is a reaction product of a diamine (BX) including an aromatic diamine (BX1) and an acid anhydride (BY), is not particularly limited and, for example, may be 20,000 to 150,000, or 30,000 to 100,000. Here, the number average molecular weight is a polystyrene-equivalent value based on a calibration curve prepared using standard polystyrene with a gel permeation chromatography (GPC) apparatus. For example, the GPC measurement conditions can be as follows: column: Shodex OH pak SB-806M (8.0 mmφ × 300 mm) manufactured by Showa Denko K.K., × 2, mobile phase: 50 mmol/L lithium bromide-containing N,N-dimethylformamide, flow rate: 0.5 mL/min, column temperature: 50°C, injection volume: 100 μL, sample concentration: 0.1 mass%.

The method for synthesizing the polyimide (B) is not particularly limited, and synthesis by a known method is possible. Specifically, the polyimide (B) can be obtained by allowing a diamine (BX) to react with an acid anhydride (BY) to obtain a polyamic acid, followed by a cyclization-dehydration reaction to convert the polyamic acid into a polyimide.

The mixing ratio between the diamine (BX) and the acid anhydride (BY) is not particularly limited, but the molar ratio BX/BY of the diamine (BX) to the acid anhydride (BY) is preferably 50/100 to 150/100, and more preferably 90/100 to 110/100.

The reaction between the diamine (BX) and the acid anhydride (BY) may be carried out in an organic solvent. The organic solvent is not particularly limited as long as it does not react with the diamine (BX) or the acid anhydride (BY) and can dissolve the reaction product of the diamine (BX) and the acid anhydride (BY). As specific examples of organic solvents, N-methyl-2-pyrrolidone (NMP), N-ethyl-2-pyrrolidone (NEP), N,N-dimethylformamide (DMF), N,N-diethylformamide, N,N-dimethylacetamide (DMAc), N,N-diethylacetamide, 1,3-dimethyl-2-imidazolidinone (DMI), dimethyl sulfoxide (DMSO), γ-butyrolactone, and the like can be mentioned. Any one of them can be used alone, and it is also possible to use a combination of two or more kinds.

The imidization reaction (cyclization-dehydration reaction) may be chemical imidization or thermal imidization. During the cyclization-dehydration reaction, an imidization catalyst may be used. For example, trimethylamine, triethylamine, propylamine, aniline, benzylamine, toluidine, pyridine, picoline, quinoline, isoquinoline, and the like can be used. In addition, if necessary, an azeotropic dehydrating agent, such as toluene, xylene, or ethylcyclohexane, or an acid catalyst, such as acetic anhydride, propionic anhydride, butyric anhydride, or benzoic anhydride, may also be used. In addition, in the reaction between the diamine and the acid anhydride, a capping agent such as benzoic acid, phthalic anhydride, hydrogenated phthalic anhydride, or the like may also be used.

[(C) Organic Solvent]

The organic solvent (C) contained in the dispersion according to this embodiment may be the organic solvent used during the polyimide synthesis reaction described above, or may also be an organic solvent different from the one used during the synthesis reaction. It is preferable that the organic solvent used during the synthesis reaction is contained.

As specific examples of organic solvents (C), polar organic solvents such as N-methyl-2-pyrrolidone (NMP), N-ethyl-2-pyrrolidone (NEP), N,N-dimethylformamide (DMF), N,N-diethylformamide, N,N-dimethylacetamide (DMAc), N,N-diethylacetamide, 1,3-dimethyl-2-imidazolidinone (DMI), dimethyl sulfoxide (DMSO), and γ-butyrolactone can be mentioned. Any one of them can be used alone, and it is also possible to use a combination of two or more kinds. Among them, as organic solvents (C), amide solvents composed of amides are preferable, and it is more preferable to use N-methyl-2-pyrrolidone.

In one embodiment, the organic solvent (C) may be N-methyl-2-pyrrolidone alone or a combination of N-methyl-2-pyrrolidone with other organic solvents. It is preferable that at least 50 mass% of the organic solvent (C) is N-methyl-2-pyrrolidone, and it is more preferable that at least 80 mass% (i.e., 80 to 100 mass%) is N-methyl-2-pyrrolidone.

[Dispersion]

The dispersion according to this embodiment is a liquid dispersion in which the carbon nanotubes (A) are dispersed in the organic solvent (C) with the polyimide (B), and the polyimide (B) has a function as a dispersant for dispersing the carbon nanotubes (A) in the organic solvent (C).
In the dispersion according to this embodiment, the content of the carbon nanotubes (A) is not particularly limited and may be, for example, 0.05 to 2.0 mass%, or 0.2 to 1.0 mass%, based on 100 mass% of the dispersion.
The content of the polyimide (B) in the dispersion is not particularly limited as long as the carbon nanotubes (A) can be dispersed in the organic solvent (C). The content of the polyimide (B) is, for example, preferably 0.5 to 10.0 mass%, more preferably 1.0 to 4.0 mass%, based on 100 mass% of the dispersion.
The content of the organic solvent (C) in the dispersion is not particularly limited and may be, for example, 88.0 to 99.4 mass%, or 95.0 to 98.8 mass%, based on 100 mass% of the dispersion.
The method for producing a dispersion is not particularly limited as long as carbon nanotubes are dispersed in an organic solvent. For example, it is possible that carbon nanotubes and a polyimide are added to an organic solvent and subjected to a dispersion treatment. Alternatively, it is also possible that carbon nanotubes are added to an organic solvent and subjected to a dispersion treatment, and then a polyimide is added, followed by a further dispersion treatment. At this time, as the polyimide, a polyimide solution synthesized in an organic solvent may be used.
The method for a dispersion treatment for dispersing carbon nanotubes is not particularly limited, and, for example, stirring treatments and ultrasonic treatments can be mentioned. As stirring treatments, for example, high-speed stirring such as a homomixer or a homogenizer, media mills such as a bead mill, a sand mill, and a planetary mill, revolution-rotation stirring, and the like can be mentioned. As ultrasonic treatments, treatments using a bath-type or probe-type sonicator can be mentioned.
In addition to the carbon nanotubes (A), the polyimide (B), and the organic solvent (C), the dispersion according to this embodiment may also contain additives. As additives, for example, weathering agents, antibacterial agents, antifungal agents, pigments, rust preventives, dyes, film-forming aids, silane coupling agents, antiblocking agents, viscosity modifiers, leveling agents, antifoaming agents, dispersion stabilizers, light stabilizers, antioxidants, UV absorbers, inorganic fillers, organic fillers, plasticizers, lubricants, antistatic agents, and the like can be mentioned.

[Coating Liquid Composition for Electrode]

In one embodiment, the dispersion described above is used as a coating liquid for an electrode. That is, a coating liquid composition for an electrode according to one embodiment contains the dispersion according to the above embodiment.
In an electrode including a current collector and an active material layer formed on the current collector, for example, the coating liquid composition for an electrode is used to form the active material layer. In that case, the coating liquid composition for an electrode may contain, along with the dispersion containing carbon nanotubes (A), a polyimide (B), and an organic solvent (C) described above, an electrode active material and a conductive agent.
As one of the reasons why the discharge capacity of the negative electrode of a lithium ion battery decreases as the charge/discharge cycle progresses, contact loss between active material particles due to the expansion and contraction of the electrode active material can be mentioned, and the carbon nanotubes (A) have the role of securing a conductive path to connect active materials that have lost contact. The polyimide (B) contained in the dispersion functions, in the dispersion, as a dispersant to disperse the carbon nanotubes (A), and, in the coating liquid composition for an electrode, functions as a binder to bind electrode active materials together or the electrode active material and the conductive agent to the current collector. According to this embodiment, because the polyimide (B) has excellent dispersibility of the carbon nanotubes (A) and is also excellent in adhesion and durability as described above, it is possible to significantly increase the number of conductive paths during cycle tests, leading to improvement in the performance of a battery including an electrode prepared using the coating liquid composition for an electrode.
The coating liquid composition for an electrode is preferably used for an electrode of a lithium ion secondary battery, and more preferably for its negative electrode. Therefore, the electrode active material contained in the coating liquid composition for an electrode is preferably a negative electrode active material.
As negative electrode active materials, for example, silicon-based negative electrode active materials, metal lithium, metal oxides, graphite, and the like can be mentioned. Any one of them can be used alone, and it is also possible to use a combination of two or more kinds.
In one embodiment, the negative electrode active material preferably includes a silicon-based negative electrode active material. A silicon-based negative electrode active material is a material that contains silicon (atom) and can electrochemically absorb and release lithium ions. Examples of silicon-based negative electrode active materials include particles of elemental silicon and particles of silicon compounds. As silicon compounds, for example, an alloy of at least one metal selected from the group consisting of tin, nickel, iron, copper, silver, cobalt, manganese, zinc, and the like

and silicon, a compound of at least one member selected from the group consisting of boron, nitrogen, oxygen, carbon, and the like and silicon, and the like can be mentioned. As specific examples of silicon-based negative electrode active materials, SiO, $SiO_2$, $SiB_4$, $Mg_2Si$, $Ni_2Si$, $CoSi_2$, $NiSi_2$, CusSi, $FeSi_2$, $MnSi_2$, $ZnSi_2$, SiC, $Si_3N_4$, $Si_2N_2O$, and the like can be mentioned.

As the conductive agent contained in the coating liquid composition for an electrode, for example, carbon black (acetylene black, Ketjen black, furnace black, etc.), graphite, carbon fibers, carbon flakes, metal fibers and foils, and the like can be mentioned. Any one of them can be used alone, and it is also possible to use a combination of two or more kinds. Among them, carbon black is preferable, and acetylene black is more preferable.

The content of the carbon nanotubes (A) in the solids of the coating liquid composition for an electrode is not particularly limited and may be, for example, 0.01 to 1.0 mass%, or 0.05 to 0.5 mass%. The content of the polyimide (B) in the solids of the coating liquid composition for an electrode is not particularly limited and may be, for example, 0.5 to 30 mass%, or 3 to 20 mass%. The content of the organic solvent (C) in the coating liquid composition for an electrode is not particularly limited and may be, for example, 20 to 80 mass%, or 40 to 70 mass%. The content of the electrode active material in the solids of the coating liquid composition for an electrode is not particularly limited and may be, for example, 65 to 99 mass%, or 75 to 95 mass%. The content of the conductive agent in the solids of the coating liquid composition for an electrode is not particularly limited and may be, for example, 0.1 to 25 mass%, or 1 to 20 mass%.

In addition to the above components, the coating liquid composition for an electrode may also contain additives such as weathering agents, antibacterial agents, antifungal agents, pigments, rust preventives, dyes, film-forming aids, silane coupling agents, antiblocking agents, viscosity modifiers, leveling agents, antifoaming agents, dispersion stabilizers, light stabilizers, antioxidants, UV absorbers, inorganic fillers, organic fillers, plasticizers, lubricants, and antistatic agents.

[Electrode]

An electrode according to an embodiment includes a layer made of solids of the coating liquid composition for an electrode described above. In one embodiment, the electrode may include a current collector and an active material layer (preferably a negative electrode active material layer) formed on the current collector, and, in that case, the active material layer is the layer made of solids of the coating liquid composition for an electrode. Therefore, the active material layer may contain carbon nanotubes (A), a polyimide (B), an electrode active material (preferably negative electrode active material), and a conductive agent.

The active material layer can be formed, for example, by applying the coating liquid composition for an electrode to a current collector, followed by drying. The thickness of the active material layer is not particularly limited and may be, for example, 15 to 150 $\mu$m.

The current collector is not particularly limited as long as it is an electronic conductor that does not adversely affect the constructed battery. Examples of current collectors usable include copper, stainless steel, nickel, aluminum, titanium, calcined carbon, conductive polymers, conductive glass, and Al-Cd alloys, as well as copper and the like surface-treated with carbon, nickel, titanium, silver, or the like for the purpose of improving adhesion, conductivity, and oxidation resistance. The current collector may be foil-shaped, or may also be film-shaped, sheet-shaped, or net-shaped, and it is also possible to use a punched or expanded article, a lath body, a porous body, a foam, or a like formed body.

[Lithium Ion Secondary Battery]

A lithium ion secondary battery according to an embodiment includes the electrode described above, and preferably includes the electrode as a negative electrode. Specifically, the lithium ion secondary battery includes a negative electrode, a positive electrode, a separator disposed between the negative electrode and the positive electrode, and an electrolyte, in which an electrode prepared using the coating liquid composition for an electrode described above is used as the negative electrode. For the positive electrode, separator, and electrolyte, known configurations can be employed without any particular limitations.

As one embodiment, a lithium ion secondary battery may include a laminate obtained by alternately laminating a negative electrode and a positive electrode via a separator, a container that houses the laminate, and an electrolyte, such as a non-aqueous electrolyte, injected into the container. As the non-aqueous electrolyte, for example, a lithium salt dissolved as a supporting electrolyte in an organic solvent can be used, and the lithium ion secondary battery can be thus constructed.

EXAMPLES

Hereinafter, the invention will be described in further detail based on examples and comparative examples, but is not limited thereto.

The chemical formulas of the diamines and acid anhydrides used in the examples are shown below.

(Diamine)

[Chemical formula 5]

BAPS: 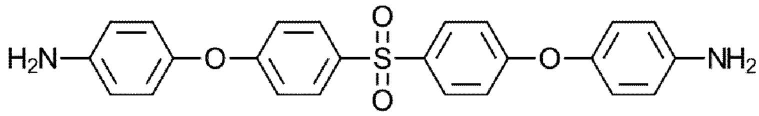

[Chemical formula 6]

PHBAAB: 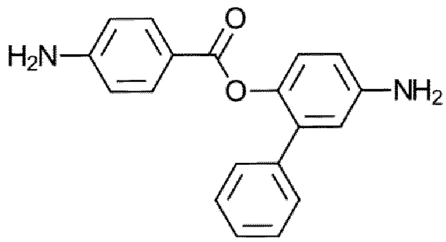

[Chemical formula 7]

MBAA: 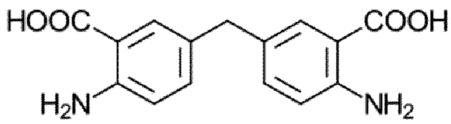

[Chemical formula 8]

BAPP: 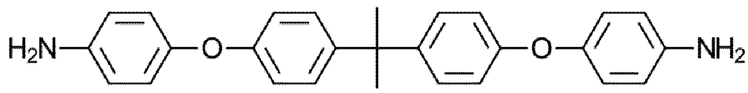

[Chemical formula 9]

APB-N: 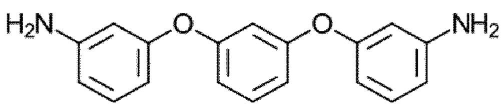

(Acid Anhydride)

[Chemical formula 10]

ODPA: 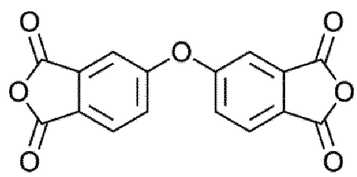

[Chemical formula 11]

BPDA: 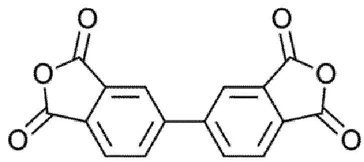

[Chemical formula 12]

BTDA: 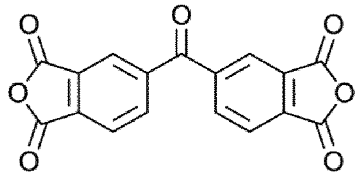

[Chemical formula 13]

CpODA: 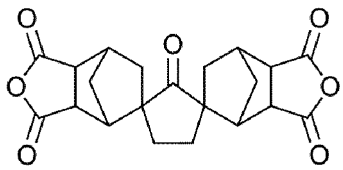

Details of the carbon nanotubes used in the examples are as follows.

- Carbon nanotubes: Single-walled carbon nanotubes (SWCNT). Carbon purity > 99%, average diameter = 1.6 nm. "TUBALL BATT" manufactured by OCSiAL

The synthesis methods for polyimide-1 to polyimide-5 are as follows.

(Synthesis Example 1: Polyimide-1)

To a 2,000-ml separable flask equipped with a nitrogen inlet and a stirring apparatus, 43.25 g (100 mmol) of bis[4-(4-aminophenoxy)phenyl]sulfone (BAPS) which is an aromatic diamine compound represented by the above formula, 30.43 g (100 mmol) of (2-phenyl-4-aminophenyl)-4-aminobenzoate (PHBAAB) which is an aromatic diamine compound represented by the above formula, 62.04 g (200 mmol) of 4,4'-oxydiphthalic anhydride (ODPA) represented by the above formula, 868 g of N-methyl-2-pyrrolidone, 4.0 g (50 mmol) of pyridine, and 87 g of toluene were added, and allowed to react in a nitrogen atmosphere at 180°C for 6 hours while removing toluene out of the system along the way, thereby giving a 15 mass% polyimide solution.

(Synthesis Example 2: Polyimide-2)

To a 2,000-ml separable flask equipped with a nitrogen inlet and a stirring apparatus, 28.83 g (67 mmol) of bis[4-(4-aminophenoxy)phenyl]sulfone (BAPS) which is an aromatic diamine compound represented by the above formula, 20.29 g (67 mmol) of (2-phenyl-4-aminophenyl)-4-aminobenzoate (PHBAAB) which is an aromatic diamine compound represented by the above formula, 19.09 g (67 mmol) of 5,5'-methylenebis(2-aminobenzoic acid) (MBAA) which is an aromatic diamine compound represented by the above formula, 29.42 g (100 mmol) of diphenyl-3,3',4,4'-tetracarboxylic dianhydride (BPDA) represented by the above formula, 31.02g (100 mmol) of 4,4'-oxydiphthalic anhydride (ODPA) represented by the above formula, 868 g of N-methyl-2-pyrrolidone, 4.0 g (50 mmol) of pyridine, and 87 g of toluene were added, and allowed to react in a nitrogen atmosphere at 180°C for 6 hours while removing toluene out of the system along the way, thereby giving a 15 mass% polyimide solution.

(Synthesis Example 3: Polyimide-3)

To a 2,000-ml separable flask equipped with a nitrogen inlet and a stirring apparatus, 86.50 g (200 mmol) of bis[4-(4-aminophenoxy)phenyl]sulfone (BAPS) which is an aromatic diamine compound represented by the above formula, 29.42 g (100 mmol) of diphenyl-3,3',4,4'-tetracarboxylic dianhydride (BPDA) represented by the above formula, 31.02g (100 mmol) of 4,4'-oxydiphthalic anhydride (ODPA) represented by the above formula, 868 g of N-methyl-2-pyrrolidone, 4.0 g (50 mmol) of pyridine, and 87 g of toluene were added, and allowed to react in a nitrogen atmosphere at 180°C for 6 hours while removing toluene out of the system along the way, thereby giving a 15 mass% polyimide solution.

(Synthesis Example 4: Polyimide-4)

To a 2,000-ml separable flask equipped with a nitrogen inlet and a stirring apparatus, 41.05 g (100 mmol) of 2,2'-bis[4-(4-aminophenoxy)phenyl]propane (BAPP) which is an aromatic diamine compound represented by the above formula, 29.23 g (100 mmol) of 1,3-bis(3-aminophenoxy)benzene (APB-N) which is an aromatic diamine compound represented by the above formula, 32.22 g (100 mmol) of 3,3',4,4'-benzophenonetetracarboxylic dianhydride (BTDA) represented by the above formula, 31.02 g (100 mmol) of 4,4'-oxydiphthalic anhydride (ODPA) represented by the above formula, 868 g of N-methyl-2-pyrrolidone, 4.0 g (50 mmol) of pyridine, and 87 g of toluene were added, and allowed to react in a nitrogen atmosphere at 180°C for 6 hours while removing toluene out of the system along the way, thereby giving a 15 mass% polyimide solution.

(Synthesis Example 5: Polyimide-5)

To a 2,000-ml separable flask equipped with a nitrogen inlet and a stirring apparatus, 86.50 g (200 mmol) of bis[4-(4-aminophenoxy)phenyl]sulfone (BAPS) which is an aromatic diamine compound represented by the above formula, 76.88 g (200 mmol) of 2'-oxodispiro[bicyclo[2.2.1]heptane-2,1'-cyclopentane-3',2"-bicyclo[2.2.1]heptane]-5,6:5",6"-tetracarboxylic dianhydride (CpODA) represented by the above formula, 868 g of N-methyl-2-pyrrolidone, 4.0 g (50 mmol) of pyridine, and 87 g of toluene were added, and allowed to react in a nitrogen atmosphere at 180°C for 10 hours while removing toluene out of the system along the way, thereby giving a 15 mass% polyimide solution.

(Dispersibility Evaluation Method)

The dispersibility of carbon nanotubes in the examples and comparative examples was evaluated using pulsed NMR. Using "Spin Track TD-NMR Spectrometer" manufactured by RESONANCE SYSTEMS as the apparatus, the relaxation time of solvent molecules in the dispersion was measured under the following conditions: observation nucleus: $^{1}H$, resonance frequency: 14 MHz, measuring unit temperature: adjusted at 30°C.

In pulsed NMR, the particle-solvent affinity can be evaluated by measuring the relaxation time of solvent molecules in a dispersion. Relaxation refers to the process by which energy once absorbed is attenuated. A free liquid (bulk liquid) that is not in contact with the particle surface has a longer relaxation time. Meanwhile, the relaxation time of a liquid in contact with the particle surface is shorter. Therefore, it can be said that the shorter the relaxation time, the larger the surface area of carbon nanotubes in contact with the solvent, and the higher the dispersibility of carbon nanotubes. An $R_2sp$ value is a value normalized by the relaxation time of a solvent, and can be calculated by the following formula. It can be said that the higher the $R_2sp$, the larger the amount of solvent that can be constrained at the particle interface, and the larger the surface area of carbon nanotubes, that is to say, the higher the dispersibility of carbon nanotubes.

$$R_2sp\ \text{value} = Rav \div Rb - 1$$

In the formula, Rav: average relaxation time constant (reciprocal of the relaxation time of the sample),

Rb: relaxation time constant of bulk water molecules (reciprocal of the relaxation time of blank water).

(Test Example 1: Examples 1 to 3 and Comparative Examples 1 to 3)

In Examples 1 to 3, the polyimide-1 obtained in Synthesis Example 1, carbon nanotubes, and N-methyl-2-pyrrolidone were added to a dispersing machine "Stirring Degassing Apparatus Kakuhunter SK400TR" manufactured by SHASHIN KAGAKU Co., Ltd., such that the concentration of the polyimide-1 and that of carbon nanotubes in the entire mixture were 2 mass% and 0.4 mass%, respectively, (total weight of the mixture: 80 g) and subjected to a rough mixing treatment and further to a dispersion treatment under the conditions shown in Table 1 below (revolution speed,

rotation speed, and treatment time), thereby giving a dispersion of carbon nanotubes. Specifically, in the rough mixing treatment, the conditions were: revolution speed = 300 rpm, rotation speed = 300 rpm, time = 15 minutes, while in the dispersion treatment, the conditions were: revolution speed = 1,400 rpm, rotation speed = 2,000 rpm, and the time was set at 10 minutes (Example 1), 35 minutes (Example 2), and 60 minutes (Example 3).

In Comparative Examples 1 to 3, dispersions of carbon nanotubes were obtained in the same manner as in Examples 1 to 3, except that the polyimide-5 obtained in Synthesis Example 5 was used instead of the polyimide-1.

[Table 1]

| | Polyimide Species | Rough Mixing Treatment | | | Dispersion Treatment | | | Dispersibility Evaluation | |
|---|---|---|---|---|---|---|---|---|---|
| | | Revolution speed [rpm] | Rotation speed [rpm] | Time [min] | Revolution speed [rpm] | Rotation speed [rpm] | Time [min] | Relaxation time [ms] | $R_2sp$ [-] |
| Ex. 1 | Polyimide-1 | 300 | 300 | 15 | 1400 | 2000 | 10 | 98.4 | 17.9 |
| Comp. Ex. 1 | Polyimide-5 | | | | | | | 565.7 | 2.3 |
| Ex. 2 | Polyimide-1 | | | | | | 35 | 69.4 | 25.8 |
| Comp. Ex. 2 | Polyimide-5 | | | | | | | 468.2 | 3.0 |
| Ex. 3 | Polyimide-1 | | | | | | 60 | 56.5 | 31.9 |
| Comp. Ex. 3 | Polyimide-5 | | | | | | | 395.1 | 3.7 |

The obtained dispersions of Examples 1 to 3 and Comparative Examples 1 to 3 were evaluated for the dispersibility of carbon nanotubes. As a result, as shown in Table 1, in Examples 1 to 3, the relaxation time was shorter and the $R_2$sp was higher than in Comparative Examples 1 to 3, indicating that the dispersibility of carbon nanotubes was significantly improved.

(Test Example 2: Examples 4 and 5 and Comparative Examples 4 to 6)

In Example 4, the polyimide-1 obtained in Synthesis Example 1, carbon nanotubes, and N-methyl-2-pyrrolidone were added to a dispersing machine "Stirring Degassing Apparatus Kakuhunter SK400TR" manufactured by SHASHIN KAGAKU Co., Ltd., such that the concentration of the polyimide-1 and that of carbon nanotubes in the entire mixture were 2 mass% and 0.4 mass%, respectively, (total weight of the mixture: 80 g) and subjected to a rough mixing treatment, in which revolution speed = 300 rpm, rotation speed = 300 rpm, and time = 15 minutes, and then to a dispersion treatment, in which revolution speed = 1,400 rpm, rotation speed = 2,000 rpm, and time = 35 minutes, thereby giving a dispersion of carbon nanotubes.

Dispersions of carbon nanotubes were obtained in the same manner as in Example 4, except for using, instead of the polyimide-1, the polyimide-2 obtained in Synthesis Example 2 in Example 5, the polyimide-3 obtained in Synthesis Example 3 in Comparative Example 4, the polyimide-4 obtained in Synthesis Example 4 in Comparative Example 5, and the polyimide-5 obtained in Synthesis Example 5 in Comparative Example 6.

[Table 2]

| | Polyimide Species | Dispersibility Evaluation | |
|---|---|---|---|
| | | Relaxation time [ms] | $R_2$sp [-] |
| Ex. 4 | Polyimide-1 | 81.6 | 22.1 |
| Ex. 5 | Polyimide-2 | 75.8 | 21.5 |
| Comp. Ex. 4 | Polyimide-3 | 161.1 | 10.6 |
| Comp. Ex. 5 | Polyimide-4 | 273.5 | 5.6 |
| Comp. Ex. 6 | Polyimide-5 | 388.6 | 3.8 |

The obtained dispersions of Examples 4 and 5 and Comparative Examples 4 to 6 were evaluated for the dispersibility of carbon nanotubes. As a result, as shown in Table 2, in Examples 4 and 5, the relaxation time was shorter and the $R_2$sp was higher than in Comparative Examples 4 to 6, indicating that the dispersibility of carbon nanotubes was significantly improved.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

Although some embodiments of the invention have been described above, these embodiments are presented as examples and not intended to limit the scope of the invention. These embodiments can be implemented in other various modes, and, without departing from the gist of the invention, various omissions, substitutions, and changes can be made thereto. These embodiments, as well as omissions, substitutions, and changes thereto, etc., fall within the scope and gist of the invention, and also fall within the scope of the claimed invention and its equivalents.

## Claims

1. A dispersion, wherein carbon nanotubes are dispersed in an organic solvent with a polyimide containing an aromatic diamine compound represented by the following general formula (1) as a polymerization component:

[Chemical formula 1]

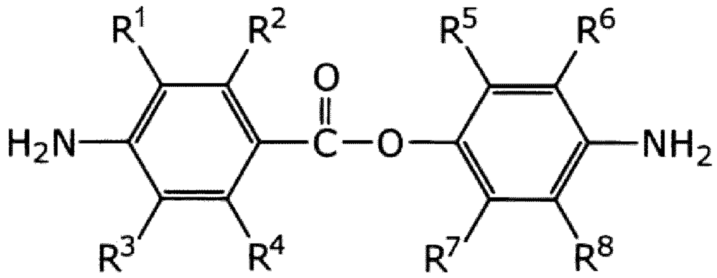

(1)

wherein $R^1$ to $R^8$ are each independently selected from the group consisting of a hydrogen atom, a fluorine atom, a substituted or unsubstituted saturated aliphatic group, a substituted or unsubstituted saturated alicyclic group, and a substituted or unsubstituted aromatic group, and at least one of $R^1$ to $R^8$ is a substituted or unsubstituted aromatic group.

2. The dispersion according to claim 1, wherein the aromatic diamine compound comprises a compound represented by the following formula (2):

[Chemical formula 2]

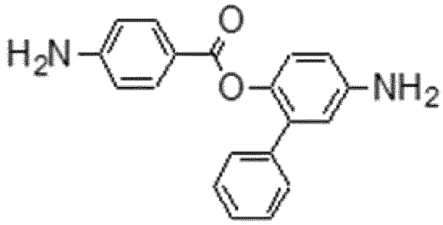

(2)

3. The dispersion according to claim 1 or 2, wherein the carbon nanotubes are single-walled carbon nanotubes.

4. The dispersion according to any one of claims 1 to 3, wherein the organic solvent comprises N-methyl-2-pyrrolidone.

5. A coating liquid composition for an electrode, comprising the dispersion according to any one of claims 1 to 4.

6. The coating liquid composition for an electrode according to claim 5, further comprising a silicon-based negative electrode active material.

7. An electrode comprising a layer made of solids of the coating liquid composition for an electrode according to claim 5 or 6.

8. A lithium ion secondary battery comprising the electrode according to claim 7.

**INTERNATIONAL SEARCH REPORT**

International application No.
**PCT/JP2022/040229**

**A. CLASSIFICATION OF SUBJECT MATTER**

***C08L 79/08***(2006.01)i; ***C01B 32/174***(2017.01)i; ***C08G 73/10***(2006.01)i; ***C08K 3/04***(2006.01)i; ***C08K 3/08***(2006.01)i; ***C08K 5/3415***(2006.01)i; ***H01M 4/134***(2010.01)i; ***H01M 4/1395***(2010.01)i; ***H01M 4/62***(2006.01)i
FI: C08L79/08; C01B32/174; C08G73/10; C08K3/04; C08K3/08; C08K5/3415; H01M4/134; H01M4/1395; H01M4/62 Z

According to International Patent Classification (IPC) or to both national classification and IPC

**B. FIELDS SEARCHED**

Minimum documentation searched (classification system followed by classification symbols)

C08L79/08; C01B32/174; C08G73/10; C08K3/04; C08K3/08; C08K5/3415; H01M4/134; H01M4/1395; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2018-118947 A (WINGO TECH CO LTD) 02 August 2018 (2018-08-02) claims, examples | 1-8 |
| A | WO 2021/028960 A1 (TAIYO HOLDINGS CO LTD) 18 February 2021 (2021-02-18) claims, examples | 1-8 |
| A | WO 2021/053800 A1 (WINGO TECH CO LTD) 25 March 2021 (2021-03-25) claims, examples | 1-8 |
| A | JP 2013-36021 A (UBE INDUSTRIES LTD) 21 February 2013 (2013-02-21) claims, examples | 1-8 |
| A | JP 2021-20982 A (AJINOMOTO KK) 18 February 2021 (2021-02-18) claims, examples | 1-8 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2022** | **10 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/040229**

| Patent document cited in search report | Publication date (day/month/year) | Patent family member(s) | Publication date (day/month/year) |
|---|---|---|---|
| JP 2018-118947 A | 02 August 2018 | US 2019/0389795 A1<br>claims, examples<br>WO 2018/139311 A1<br>EP 3575281 A1<br>KR 10-2018-0099863 A<br>CN 110198926 A | |
| WO 2021/028960 A1 | 18 February 2021 | TW 202120593 A<br>claims, examples | |
| WO 2021/053800 A1 | 25 March 2021 | (Family: none) | |
| JP 2013-36021 A | 21 February 2013 | (Family: none) | |
| JP 2021-20982 A | 18 February 2021 | CN 112280296 A<br>claims, examples<br>KR 10-2021-0012935 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013036021 A